# EUROPEAN PATENT APPLICATION

(11) **EP 2 112 609 A1**
(43) Date of publication of application: **28.10.2009**
(21) Application number: 08154883.6
(22) Date of filing: 21.04.2008
(51) Int. Cl.: G06F 17/30

(54) **System and method for providing remote data**

(71) Applicant: LogiCO2 Online, 7502 Mersch (LU)
(72) Inventor: Hansson, Bo, 7557, Mersch (LU); Eliasson, Ronnie, 442 97, KODE (SE)
(74) Representative: Fritsche, Daniel

(57) **Abstract**

The present invention relates to a system (10) for providing remote data. The system comprises: a central unit (15); at least one entity (11, 13) adapted to produce remote data; and at least one local unit (12, 14) adapted to collect remote data from one or more of the at least one entity and forward the collected remote data to said central unit in accordance with configuration data. Said central unit is adapted to store configuration data for each local unit, and each local unit is adapted to retrieve its configuration data from said central unit.

The present invention also relates to a corresponding method.

## Description

### Technical Field

The present invention relates to a system for providing remote data. The present invention also relates to a corresponding method.

### Background of the Invention

There is currently a great demand for systems providing data from restaurants, bars and other commercial environments for security, quality surveillance and logistics purposes, both for internal use and for external suppliers. Several well known principles exist within this field of technology.

In a prior art system, for instance "Service Online" provided by LogiCO2 Online, a local unit is arranged in association with a location, e.g. a restaurant. The local unit is connected to several sensors distributed in the restaurant. The sensors may include temperature sensors, weight sensors, pressure sensors and/or CO₂-sensors. The local unit is pre-programmed to control its sensors and collect and store data from the sensors in accordance with configuration data permanently stored in the local unit. Further, the local unit is connected to a central server for central monitoring based on the data collected by the local unit.

However, a problem with the prior art system described above is that the data stored in the local unit, i.e. remote data collected from the sensors and configuration data, may posses a security risk, if those data, which may be confidential and have a high commercial value, are acquired by an illegal party unlawfully accessing the local unit. Further, any update of the local unit's configuration data has to be made on location, which indeed is cumbersome and makes the system inflexible.

### Summary of the Invention

It is an object of the present invention to at least partly overcome the above mentioned problems, and to provide an improved system for providing remote data, which system is particular is secure and flexible.

These and other objects that will be apparent from the following description are achieved by a system and method according to the appended independent claims 1 and 14, respectively.

Advantageous embodiments are set forth in the appended dependent claims.

According to an aspect of the present invention, there is provided a system for providing remote data, the system comprising: a central unit; at least one entity adapted to produce remote data; and at least one local unit adapted to collect remote data from one or more of the at least one entity and forward the collected remote data to the central unit in accordance with configuration data, wherein the central unit is adapted to store configuration data for each local unit, and wherein each local unit is adapted to retrieve its configuration data from the central unit.

The system of the present invention is based upon the realization that the central unit, such as a server, stores basically all configuration data for each local unit of the system, and hence the central unit essentially controls the behaviour of each local unit, in particular with respect to collecting and forwarding data. An advantage with the present system is that it is easy to maintain, since all configuration data may be updated from a single unit, i.e. the central unit. Storing all configuration data in the central unit makes the system very flexible, allowing an easy update of configuration data to a local unit if for example a new entity for producing data is added to that local unit, if there are new requirements from a user of the system, etc. Further, the collected data is preferably not stored or processed in the local unit, but forwarded to the central unit of the system, which increases security by making the collected data less available for an intruder at the local unit.

Preferably, each local unit is provided with a local unit identity and an address to the central unit upon installation of the local unit. Its identity and the address to the central unit is basically all the information the local unit needs in order to be able to retrieve its configuration data from the central unit, except some standard communications instructions, and is hence the only specific information that has to be pre-programmed to the local unit upon installation.

Moreover, the at least one local unit is preferably adapted to initiate all communications with the central unit. An advantage with this is that the local unit controls all communications with the central unit. Preferably, the local unit is adapted not to respond to any incoming calls, preventing intrusion from an unlawful party, which in turn increases security.

Preferably, each local unit is adapted to automatically retrieve its configuration data from the central unit upon power-up of the local unit or loss of configuration data in the local unit. The local unit may further retrieve new configuration data from the central unit at any time that it initiates communication with the central unit. When it is time to update a local unit with new configuration data, the central unit prepares the new configuration data, which new configuration data then are retrieved by the local unit the next time that the local unit initiates communication with the central unit to forward collected data to the central unit.

Furthermore, each local unit is preferably adapted to store its configuration data in a volatile memory of the local unit, such as a RAM, which memory also may be used for temporary storage of collected data. An advantage with this is that neither the configuration data nor any temporarily stored collected data will be available for an intruder if the local unit is shut off and the power to the memory is lost, since a volatile memory generally requires power to maintain the stored information. Configuration data is hence only stored in the local unit as long as the local unit is on, and collected data is stored until it is transferred to the central unit (or as long as the local unit is on), which indeed is beneficial from a security point of view.

The central unit may be adapted to store the remote data from the at least one local unit, preferably in a non-volatile memory of the central unit. Hence, the collected data is generally maintained in the central unit instead of in the local unit(s), which again is beneficial from a security point of view, since plural local units in remote premises may be more difficult to secure from intrusion than a single central unit.

The communication between the at least one entity and the at least one local unit may be wired or wireless. An example of suitable wireless communication is Bluetooth. Further, the central unit and the at least one local unit may be connected via a wide area network, preferably the Internet. Further, multiple access can be provided between the elements of the system for the purpose of redundancy.

In one embodiment, the at least one entity may include a sensor network with at least one distributed sensor unit adapted to produce remote data by measuring at least one parameter. In such an embodiment, the sensor units of the sensor network produce remote measurement data to be collected by the local unit(s). The parameter that is measured by a sensor unit may be, but is not limited to, one of CO₂-level, temperature, pressure, and weight.

Alternatively or complementary, the at least one entity may include other distributed units adapted to produce other remote data, for example detector units adapted to produce for instance state information or alarms, for example of an apparatus the detector unit is associated with.

The present system may further comprise a plurality of receivers, wherein the central unit is adapted to securely distribute remote data originating from at least one predetermined unit, e.g. the sensor unit or other detector unit described above, of the at least one entity to at least one predetermined receiver, wherein the receivers could be various electronic media or devices, such as a computer or computer application, a mobile phone, a fax, etc., which may be owned by different users (which in turn may own different units).

In other words, remote data from a certain sensor unit or certain sensor units are distributed by the central unit only to a certain receiver or certain receivers. An advantage of this is that several independent users through the present system can receive remote data from specific sensor units monitoring their own equipment or stock of goods. Thus, there is no need of using parallel systems, which otherwise would have been a feasible option. However, the present system is less costly and more easy to maintain and more efficient, since no parallel structures are necessary.

Further, collected remote data may be very business sensitive and must be kept secret by each receiver (user). To this end, in one embodiment, each remote data is preferably marked with an identifier, wherein the central unit is adapted to distribute the remote data to the receivers in accordance with the identifier. Hence, a remote data marked with a certain identifier is only distributed to a certain receiver or certain receivers. Additionally, or complementary, end-to-end encryption could for instance be used between appropriate sensor units and receivers to boost security.

In an exemplary application of the present invention, a first local unit is arranged in association with a first location and adapted to collect first remote data from a first entity with a first set of units distributed in said first location and forward the collected first remote data to the central unit in accordance with first configuration data, a second local unit is arranged in association with a second location and adapted to collect second remote data from a second entity with a second set of units distributed in said second location and forward the collected second remote data to the central unit in accordance with second configuration data, and said central unit is adapted to store the first and second configuration data, the first and second local units being adapted to retrieve the first and second configuration data, respectively, from the central unit. Said units may be the sensor units of a sensor network, or other detector units, as described above.

According to another aspect of the present invention, there is provided a method of providing remote data, the method comprising: producing remote data by means of at least one entity; collecting the produced remote data by means of at least one local unit in accordance with configuration data; and forwarding the collected remote data from at least one local unit to a central unit in accordance with the configuration data, wherein the central unit is adapted to store configuration data for each local unit, and wherein each local unit is adapted to retrieve its configuration data from the central unit.

Advantages and features of the present aspect of the present invention are analogous to those described above in connection with the first aspect of the invention.

### Brief description of the drawings

In the following, currently preferred embodiments of the present invention will be described in detail, with reference to the accompanying, exemplifying drawings on which:
Figure 1 is a block diagram of an embodiment of the system according to the present invention.
Figure 2 is a flow chart schematically illustrating an embodiment of the method according to the present invention.
Figure 3 is a block diagram of another embodiment of the system according to the present invention.

### Detailed description of preferred embodiments

In the following description, some standard features, such as communication interfaces, power supplies, and the like, have been omitted for the sake of clarity.

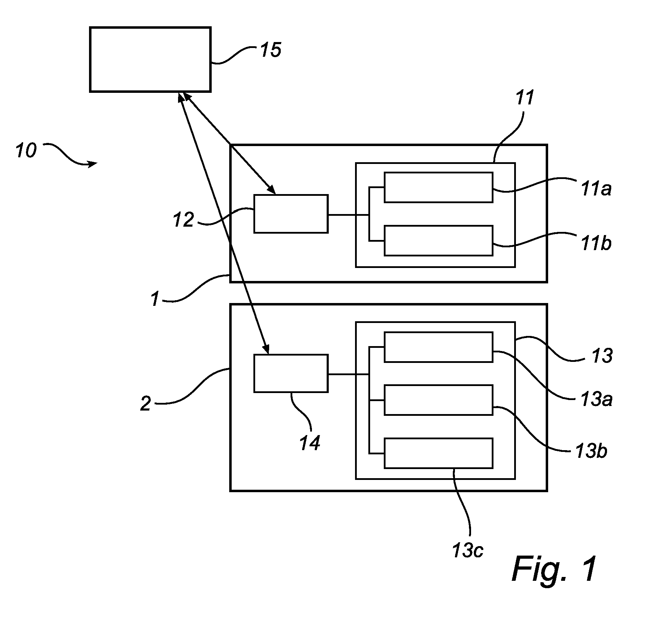

A system 10 for providing data is schematically illustrated in figure 1. The system comprises two entities 11, 13 adapted to produce remote data, which are positioned in two different areas or locations 1, 2, such as two different restaurants, bars or other commercial environments.

A local unit 12, 14 is arranged in each of the two areas 1, 2. The local unit 12 is connected to the entity 11, while the local unit 14 is connected to the entity 13, for example via a wired connection.

Further, a central unit 15, such as a central server, is connected to both local units 12, 14 via a wide area network (WAN), such as the Internet. The connection may be wired or wireless. The central unit 15 stores configuration data for each of the local units 12, 14.

In a more detailed description of the entities 11 and 13, entity 11 comprises a sensor network with two distributed sensor units 11a, 11b, each producing a different type of remote measurement data. As an example unit 11a may measure temperature of the area or of an apparatus situated in the area, and unit 11 b may measure carbon dioxide, CO₂.

Entity 13 comprises another network of units 13a-c, each producing a different type of data. For example, 13a may produce state data or alarm for an apparatus, while 13b may measure temperature, and 13c may measure pressure.

The units of the entities 11, 13 may be connected directly to the local units or via intermediate devices (not shown).

The data are 'remote' in the sense that they are usually produced some distance from the central unit 15. Also, the sensor units are 'distributed' in the sense that they may be arranged at different places throughout the area or restaurant 1,2. Also, the units 12, 14 are 'local' in the sense that they are arranged in association with the areas or locations 1, 2.

For initial set-up or installation, each local unit is provided with its identity and the (network) address to the central unit 15 and network configuration data, for example via an USB-port (not shown) or other appropriate interface of the local unit 12, 14. The identity and address is permanently stored in the local unit, e.g. in a non-volatile memory thereof. That is, at first, all local units of the present system may be generic and free from customer specific parts.

Hereinafter the description will focus on local unit 12, though the same description is valid for local unit 14. Next, the local unit 12 automatically retrieves configuration data from the central unit 15 when the local unit 12 is turned on. The configuration data are stored in e.g. a random access memory, RAM (not shown) in the local unit, and is hence only available while the local unit is on.

The configuration data that are retrieved by the local unit 12 may specify how often or at what time(s) to collect data from each of the both sensor units 11a, 11b, how often or at what time(s) to forward these data to the central unit 15, the number any type of units connected to the local unit, etc.

In the case that a local unit 12, 14 loses its configuration data it will automatically initiate a communication with the central unit 15 to retrieve new configuration data.

Further, by any initiation of communication, such as transmission of collected data, from the local unit 12 to the central unit 15, the local unit can be updated with new configuration data. The central unit 15 never transmits any configuration data to the local unit 12 by force, since the local unit does not answer to any incoming calls, in particular on the port via which it usually communicates with the server. Instead, the local unit 12 initiates all communications with the central unit 15. If a local unit has not initiated a session when expected to by the central unit, a fault situation is identified by the central unit.

The central unit 15 stores all configuration data for all local units 12, 14, and accordingly controls all behaviour for all local units 12, 14 with respect to collecting and forwarding data.

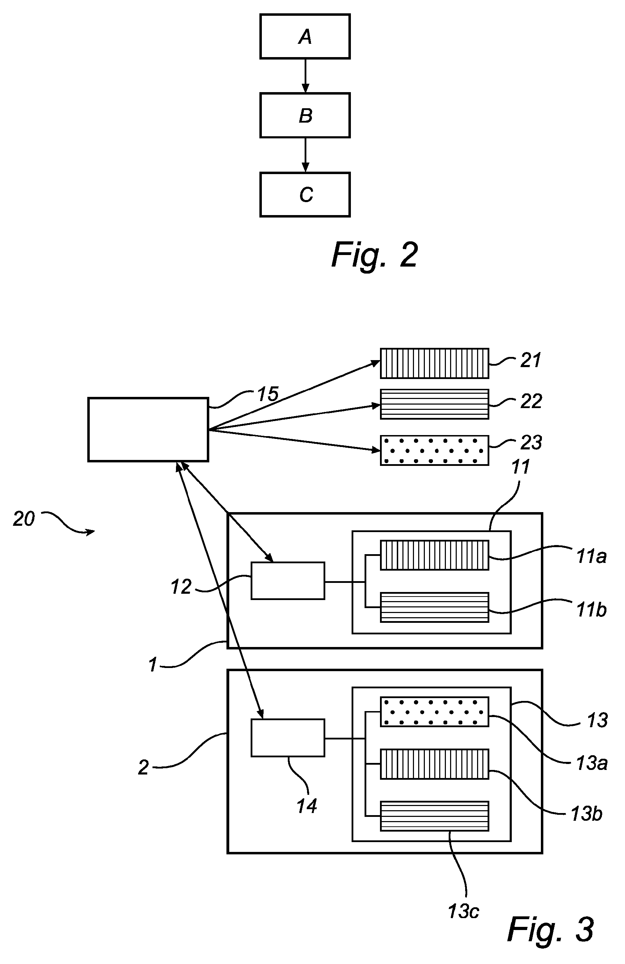

The present method of providing remote data using the system as illustrated in figure 1 is summarized in the flow chart of figure 2.

In the present example, a distributed entity, such as a sensor network, produces remote data, in step A. Thereafter, in step B, the produced data are collected by a local unit that is in connection with the entity, and arranged in the same area as the entity. The data are collected in accordance with the configuration data of the local unit, that for example regulates within which interval each data should be collected. In step C, the collected data are forwarded by the local unit to a central unit, also in accordance with configuration data, which configuration data for example may regulate within which interval collected data should be forwarded. Then, the remote data forwarded to the central unit are preferably permanently stored in the central unit or a closely associated unit thereof (e.g. a database connected to the central unit).

Another embodiment of a system for providing data 20 is schematically illustrated in figure 3. In figure 3, units equivalent of those in figure 1 are denoted by the same numerals. In addition to the system for providing data 10 in figure 1, the data stored in the central unit 15 are further distributed to receivers 21-23 in the system of figure 3. Data may for instance be transmitted from the central unit 15 to the receivers 21-23 via the Internet, and a receiver is for example a computer application or mobile telephone.

Preferably, each unit has its own identity or identifier, and is associated with a particular receiver. This association is illustrated in figure 3 by matching patterns. In this example, sensor units 11a and 13b are associated with receiver 21, sensor units 11b and 13c are both associated with receiver 22, and unit 13a is associated with receiver 23, meaning that the data which are produced by units 11a and 13b are received only by receiver 21, data produced by units 11 b and 13c are distributed to and received by receiver 22, while data produced by unit or detector 13a are received only by receiver 23. In addition, data produced by a certain sensor unit may be distributed to several receivers. For instance, remote data produced by sensor 11 a could in addition to being distributed to receiver 21 also be distributed to receiver 22.

Hence, beneficially, only one local unit per area has to be provided, even though the units of the area are associated with different receivers. Also, only a single central unit is required.

The data to be transmitted from the central unit 15 to the receivers may or may not be processed by the central unit before they are sent to the receivers. Examples of processing may be creation of reports, interpretation of raw data, and creation of messages.

The person skilled in the art realizes that the present invention by no means is limited to the preferred embodiments described above. On the contrary, many modifications and variations are possible within the scope of the appended claims. For example, the feature of securely distributing collected data to a plurality of receivers may be exercised also in system configurations other than where the central unit is adapted to store configuration data for each local unit and where each local unit is adapted to retrieve its configuration data from said central unit. Also, the system may comprise more than two local units for covering more than two premises. Also, more than one local unit could be installed in each location, for instance if the location is very large. Also, more than two or three distributed units may be connected to each local unit.

## Claims

1. A system (10) for providing remote data, the system comprising:
a central unit (15);
at least one entity (11, 13) adapted to produce remote data; and
at least one local unit (12, 14) adapted to collect remote data from one or more of the at least one entity and forward the collected remote data to said central unit in accordance with configuration data,
wherein said central unit is adapted to store configuration data for each local unit, and wherein each local unit is adapted to retrieve its configuration data from said central unit.

2. The system according to claim 1, wherein each local unit is provided with a local unit identity and an address to the central unit upon installation of the local unit.

3. The system according to claim 1 or 2, wherein said at least one local unit is adapted to initiate all communications with said central unit.

4. The system according to any preceding claim, wherein each local unit is adapted to automatically retrieve its configuration data from the central unit upon power-up of the local unit or loss of configuration data.

5. The system according to any preceding claim, wherein each local unit is adapted to store its configuration data in a volatile memory of the local unit.

6. The system according to any preceding claim, wherein the central unit is adapted to store the remote data from said at least one local unit.

7. The system according to any preceding claim, wherein communication between the at least one entity and the at least one local unit is wired or wireless.

8. The system according to any preceding claim, wherein the central unit and the at least one local unit are connected via a wide area network, preferably the Internet.

9. The system according to any preceding claim, wherein said at least one entity includes a sensor network with at least one distributed sensor unit adapted to produce remote data by measuring at least one parameter.

10. The system according to claim 9, wherein said parameter is at least one of CO₂-level, temperature, pressure, and weight.

11. The system according to claim 1, further comprising a plurality of receivers (21, 22, 23), wherein said central unit is adapted to securely distribute remote data originating from at least one predetermined unit of the at least one entity to at least one predetermined receiver.

12. The system according to claim 11, wherein each remote data is marked with an identifier, and wherein said central unit is adapted to distribute the data to said receivers in accordance with said identifier.

13. The system according to claim 1, wherein
a first local unit (12) is arranged in association with a first location (1) and adapted to collect first remote data from a first entity (11) with a first set of units (11a, 11b) distributed in said first location and forward the collected first remote data to the central unit (15) in accordance with first configuration data,
a second local (14) unit is arranged in association with a second location (2) and adapted to collect second remote data from a second entity (13) with a second set of units (13a, 13b, 13c) distributed in said second location and forward the collected second remote data to the central unit in accordance with second configuration data, and
said central unit is adapted to store the first and second configuration data, the first and second local units are adapted to retrieve the first and second configuration data, respectively, from the central unit.

14. A method of providing remote data, the method comprising:
producing remote data by means of at least one entity;
collecting the produced remote data by means of at least one local unit in accordance with configuration data; and
forwarding the collected remote data from said at least one local unit to a central unit in accordance with the configuration data,
wherein said central unit is adapted to store configuration data for each local unit, and wherein each local unit is adapted to retrieve its configuration data from said central unit.
